# EUROPÄISCHE PATENTSCHRIFT

(11) **EP 2 141 124 B1**
(45) Veröffentlichungstag und Bekanntmachung des Hinweises auf die Patenterteilung: **26.09.2018**
(21) Anmeldenummer: 09008653.9
(22) Anmeldetag: 02.07.2009
(51) Int. Cl.: C01F 5/22, C09C 1/02, B82Y 30/00

(54) **Verfahren zur Herstellung von grob- und/oder nanoskaligen, gecoateten, desagglomerierten Magnesiumhydroxidpartikeln**
Method of producing large-scale and/or nano-scale, coated, disagglomerated magnesium hydroxide particles
Procédé de fabrication de particules d'hydroxyde de magnésium à grosse échelle et/ou, nano-échelle, revêtues, désagglomérées

(30) Priorität: 04.07.2008 DE 102008031361
(43) Veröffentlichungstag der Anmeldung: 06.01.2010
(73) Patentinhaber: K+S Aktiengesellschaft, 34131 Kassel (DE)
(72) Erfinder: Glende, Christopher David, 37120 Bovenden (DE); Dressel, Stefan, Dr., 34130 Kassel (DE); Stahl, Ingo, Prof. Dr., 34246 Vellmar (DE)
(74) Vertreter: Kröncke, Rolf

(56) Entgegenhaltungen:
- EP-A- 0 395 243
- EP-A- 1 591 421
- WO-A-2008/041833
- WO-A-2008/048693
- WO-A-2008/116790
- LV J ET AL: "Controlled growth of three morphological structures of magnesium hydroxide nanoparticles by wet precipitation method" JOURNAL OF CRYSTAL GROWTH, ELSEVIER, AMSTERDAM, NL, Bd. 267, Nr. 3-4, 1. Juli 2004 (2004-07-01), Seiten 676-684, XP004519684 ISSN: 0022-0248
- CHEN ET AL: "Magnesium hydroxide nanoparticles with controlled morphologies via wet coprecipitation" MATERIALS CHEMISTRY AND PHYSICS, ELSEVIER, Bd. 109, Nr. 2-3, 8. Januar 2008 (2008-01-08), Seiten 224-229, XP022575549 ISSN: 0254-0584
- JIANPING LV ET AL: "Controlled synthesis of magnesium hydroxide nanoparticles with different morphological structures and related properties in flame retardant ethylene-vinyl acetate blends" NANOTECHNOLOGY, IOP, BRISTOL, GB, Bd. 15, Nr. 11, 1. November 2004 (2004-11-01), Seiten 1576-1581, XP020067768 ISSN: 0957-4484
- DONGMIN AN ET AL.: "In situ preparation and surface modification of magnesium hydroxide nanoparticles" COLLOIDS AND SURFACES A: PHYSICOCHEM. ENG. ASPECTS, Bd. 348, Nr. 1-3, 10. Juni 2009 (2009-06-10), Seiten 9-13, XP002549868 Elsevier
- DATABASE CAPLUS [Online] CHEMICAL ABSTRACTS SERVICE, COLUMBUS, OHIO, US; 10. März 2009 (2009-03-10), WAN, JUNXI ET AL: "Ultrasonic preparation method of magnesium hydroxide nanopowder" XP002549869 gefunden im STN Database accession no. 2009:278478 & CN 101 376 511 A (GRADUATE SCHOOL AT SHENZHEN, TSINGHUA UNIVERSITY, PEOP. REP. CHINA) 4. März 2009 (2009-03-04)
- DATABASE SCOPUS Elsevier B.V.; Oktober 2008 (2008-10), ZHOU D-P, DU Z-P, ZHOA Y-H, ZHANG G-L: "Study on surface modification of nano-sized magnesium hydroxide by polyacrylate sodium" XP002549489 & ZHOU D-P, DU Z-P, ZHOA Y-H, ZHANG G-L: "Study on surface modification of nano-sized magnesium hydroxide by polyacrylate sodium" CAILIAO GONGCHENG/JOURNAL OF MATERIALS ENGINEERING, Bd. 10, Oktober 2008 (2008-10), Seiten 291-295,

## Beschreibung

Die vorliegende Erfindung betrifft ein Verfahren nach Anspruch 1 zur Herstellung von gecoateten Magnesiumhydroxidpartikeln, wobei die einzelnen, primären Magnesiumhydroxid-partikel gecoatet sind. Erfindungsgemäß werden bestimmte Zusatzstoffe der Fällungsreaktion zum Erhalt der Magnesiumhydroxidpartikel zugegeben, um diese Magnesiumhydroxidpartikel in einem gecoateten Zustand zu erhalten, wobei jedes Primärpartikel sein eigenes Coating trägt. Es wird eine wässrige Suspension oder Dispersion erhalten, die zur direkten Weiterverarbeitung geeignet ist. Des Weiteren richtet sich die vorliegende Erfindung auf ein Verfahren zur Herstellung von grob- oder nanoskaligen, gecoateten, desagglomerierten Magnesiumhydroxidpartikeln umfassend die Behandlung von (pre)gecoateten Magnesiumhydroxidpartikeln entweder mittels Perlmahlung oder Ultraschall mit einem Dispergiermittel. Schließlich richtet sich die vorliegende Erfindung auf so erhältliche nanoskalige gecoatete Magnesiumhydroxidpartikel.

### Stand der Technik

Es ist allgemein bekannt, dass Füllstoffe in Kunststoffen zur Modifizierung der Eigenschaften als auch zur Kostenreduktion eingebracht werden. Diese Füllstoffe können hinsichtlich ihrer Teilchengröße grobskalig als auch nanoskalig sein und werden meist als getrocknete Pulver eingesetzt.

Zur Einarbeitung in thermoplastische Kunststoffe können diese Füllstoffe als feingemahlene Pulver dem Extruder zugeführt werden. Zur Einarbeitung in duroplastische Werkstoffe werden meist die getrockneten und gemahlenen Füllstoffe mit flüssigen Harzen (Monomere oder Oligomere) kombiniert, dann homogenisiert, z.B. mittels eines Intensivrührers und anschließend nach Zugabe eines Härters polymerisiert.

Grobskaliges Magnesiumhydroxid mit Oberflächen von 4 bis 10 m²/g wird als flammhemmender Füllstoff in unterschiedlichsten Kunststoffen mit Füllstoffgehalten von mindestens 50 Gew.-% eingesetzt. Es existieren eine Vielzahl an nanoskaligen Füllstoffen von unterschiedlichster chemischer Natur. Diese nanoskaligen Füllstoffe, liegen häufig als Pulver vor, welches aus agglomerierten Nanopartikeln besteht. Diese Agglomerate im Mikrometermaßstab führen aber nicht zu den gewünschten mechanischen Verbesserungen der polymeren Werkstoffe. Das heißt, es werden polymere Werkstoffe erhalten, worin agglomerierte Nanopartikel im Mikrometer-bereich vorliegen mit dem mechanischen Eigenschaftenprofil von grobskaligen Füllstoffen.

Bei thermoplastischen oder duroplastischen Materialien, bei denen der nanoskalige, getrocknete Füllstoff z. B. mittels eines Dissolvers als eine Form eines Intensivrührers mit dem Harz vermischt wird, kann lediglich ein Bruchteil der Agglomerate zerstört werden. Sowohl bei der Einarbeitung in thermoplastische Kunststoffe als auch in Monomere oder Oligomere, aus denen duroplastische Materialien hergestellt werden, reichen die durch die Verwendung von Intensivrührern zur Homogenisierung aufgebrachten Scherkräfte nicht zur vollständigen Desagglomerisierung der Füllstoffe aus.

In der WO99/08962 wird die Nassmahlung einer Magnesiumhydroxid-Slurry unter Zugabe von kationischen Polymeren als Dispergiermittel beschrieben. Diese dort erhaltenen Magnesiumhydroxidpartikel weisen allerdings Nachteile dahingehend auf, dass sie schlecht zur Einarbeitung in Polymere geeignet sind. Auch ist das dort beschriebene zweistufige Verfahren aufwendig. Eine Anpassung der Polarität der Partikel an die spätere polymere Zielmatrix für eine bessere Einarbeitbarkeit in Polymere und eine zusätzliche eventuelle Funktionalisierung der Partikel wird nicht beschrieben.

Die WO02/096982 beschreibt die Herstellung von Silica-basierten Nanocompositen mittels Extrusion in Polymethylmethacrylat. Der Füllstoff wird gemäß diesem Dokument mit Silanen funktionalisiert, als Ausgangssubstanzen werden aber agglomerierte "fumed-Silica-Arten", z. B. Aerosile ® (eingetragenes Warenzeichen von Degussa) verwendet. Diese liegen als agglomeriertes Pulver vor. Solche Agglomerate aus nanoskaligen Primärpartikeln werden nur als Ganzes mit dem Silan gecoatet, die einzelnen Primärpartikel selbst sind nicht vollständig gecoatet.

Die WO2004/074361 beschreibt ein Coaten von grobskaligen Magnesium-hydroxidagglomeraten mit zum Teil reaktiven Additiven, wie funktionalisierten Silanen. Auch hier wird trockenes und somit agglomeriertes Magnesiumhydroxid in Pulverform eingesetzt, um entsprechend gecoatete Agglomerate, aber keine einzeln gecoatete Magnesiumhydroxidpartikel zu erhalten.
Magnesiumhydroxid und Aluminiumtrihydroxid werden in Kombination mit verschiedensten Polymeren als halogenfreie mineralische Brandschutzmittel eingesetzt. Die dort eingesetzten Magnesiumhydroxid- bzw. Aluminiumtrihydroxid-Füllstoffe werden grobskalig mit Füllstoffgehalten von mindestens 50 Gew.-% in Polymeren verwendet. Mit diesem Füllstoffgehalt lässt sich nach dem vom Underwriter Laboratory in den USA entwickelten Brandschutztest UL 94 die Brandklasse V0 erreichen, allerdings leiden die mechanischen Eigenschaften des Kunststoffes deutlich unter den hohen anorganischen Füllgraden. Häufig tritt ein Verspröden des Kunststoffes ein, das verbunden ist mit einem geringen Impact-Vermögen und geringen Reißdehnungswerten.
Aus der WO01/92157 sind mikronisierte Bariumsulfate bekannt, sowie Verfahren zu deren Herstellung und Verwendung. Dabei werden gecoatete Bariumsulfate in nanoskaligen Bereichen beschrieben, die z. B. in Kosmetika, Klebstoffen, Farben oder Kautschukartikeln Anwendung finden. Allerdings werden die Nanopartikel als getrocknetes Pulver und somit als agglomerierter Füllstoff zur Verfügung gestellt.
Die EP 1 591 421 A1 beschreibt ein Verfahren zur Herstellung von nano- und mikroskaligen Partikeln von anorganischen Verbindungen unter Verwendung eines Wasserstrukturmodifizierers. Aus der WO 2008/048693 A2 sind Magnesiumhydroxid-Nanopartikel bekannt sowie Verfahren zur deren Herstellung und diese Partikel enthaltene Zusammensetzungen. Lv. Jianping et. al., Journal of Chrystal Growth, 2004, 267, 676-684 beschreibt ein kontrolliertes Wachstum von drei morphologischen Strukturen von Magnesiumhydroxid-Nanopartikeln durch ein Verfahren der Nasspräzipitation.

WO2008/041833 beschreibt ein Verfahren zur Herstellung von Mg(OH)₂-Nanopartikeln, wobei eine wässrige Magnesiumsalzlösung, enthaltend ein Tensid und eine organische Säure, mit einer wässrigen Alkalilösung, welche ein Dispergiermittel enthält, in Kontakt gebracht wird.

Der vorliegenden Erfindung liegt die Aufgabe zugrunde, Verfahren bereitzustellen, die gecoatete Magnesiumhydroxidpartikel in Form von Suspensionen oder Dispersionen bereitstellen. Diese gecoateten Magnesiumhydroxidpartikel, deren Primärpartikel im grob- oder nanoskaligen Bereich liegen können, können in Form von desagglomerierten Primärpartikeln oder in Form von lockeren Agglomeraten (Sekundärpartikel) vorliegen.

Eine weitere Aufgabe der vorliegenden Erfindung ist die Bereitstellung von nichtagglomerierten bzw. von leicht trennbaren Agglomeraten von gecoateten Primärpartikeln.

Eine weitere Aufgabe der vorliegenden Erfindung ist die Bereitstellung von gecoateten, desagglomerierten Magnesiumhydroxidpartikeln, bei der jedes einzelne Primärpartikel sein eigenes Coating trägt.

### Ausführliche Beschreibung der Erfindung

In einem ersten Aspekt richtet sich die vorliegende Erfindung auf ein Verfahren zur Herstellung von gecoateten Magnesiumhydroxidpartikeln nach Anspruch 1, wobei i) eine Magnesium-salzlösung mit ii) einer Alkalihydroxidlösung unter Bildung eines Reaktionsgemisches zur Fällung von gecoateten Magnesiumhydroxidpartikeln in Kontakt gebracht wird, dadurch gekennzeichnet, dass in zumindest einer der Lösungen i) oder ii) mindestens eines der folgenden Additive A, B und/oder C enthalten ist und
bei Inkontaktbringen von i) und ii) eine Mischung aus einem Wachstumsinhibitor A und einem Dispergiermittel B in der Reaktionsmischung vorliegt, wobei die Additive sind
- ein Wachstumsinhibitor A,
- ein Dispergiermittel B,
- eine wässrige Stearat-Lösung C oder Mischungen hiervon,
zur Herstellung einer wässrigen Suspension oder Dispersion von gecoateten Magnesiumhydroxidpartikeln, wobei die Additive A mindestens 2 anionische Gruppen oder B mehrere anionische Gruppen aufweisen, und dadurch gekennzeichnet ist, dass die Fällung in einem niedrigen Temperaturbereich von 0 bis 30°C erfolgt und dass die Magnesiumhydroxidpartikel eine BET-Oberfläche von ≥ 100 m²/g aufweisen.

Die mit dem erfindungsgemäßen Verfahren erhältlichen Magnesiumhydroxidpartikel zeichnen sich dadurch aus, dass sie bereits während des Fällungsprozesses aufgrund des Vorhandenseins der genannten Additive ein Coating der Oberfläche erhalten. Diese sowohl grobskaligen oder nanoskaligen Partikel bestehend aus Magnesiumhydroxid werden durch das Coating elektrostatisch und sterisch stabilisiert und dadurch eine zu starke Reagglomeration der Partikel gehemmt. Die Polarität der Partikel wird durch geeignete Additive verändert und an die Polarität der polymeren Zielmatrix angepasst.

Erfindungsgemäß können somit eine wässrige Suspension oder Dispersion von grob- oder nanoskaligen gecoateten Magnesiumhydroxidpartikeln bereitgestellt werden, in der die Primärpartikel in gecoateter und - je nach Wahl der Additive - desagglomerierter Form vorliegen und - je nach Wahl der Additive - dadurch so verändert wurden, dass sie anschließend als Füllstoff in Polymere eingearbeitet werden können.

In diesem Zusammenhang bedeutet der Ausdruck "desagglomeriert", dass die Sekundärpartikel nicht vollständig in Primärpartikel zerkleinert vorliegen, sondern dass diese deutlich weniger agglomeriert oder aggregiert vorliegen als nach einem Trocknungsschritt von nicht-gecoateten Primär- oder Sekundärpartikeln. Dadurch, daß jedes einzelne Primärpartikel gecoatet vorliegt, ist ein eventuell notwendiges Desagglomerieren, auch von getrocknetem, gecoatetem Magnesiumhdroxid, leichter durchführbar.

Vorliegend wird unter dem Ausdruck "grobskalig" solche Teilchengrößenverteilungen verstanden, deren mittlerer Partikeldurchmesser (d50) größer 100 nm ist. D. h. Partikel bei denen zu größer 50%, wie größer 70%, 80%, insbesondere größer 90%, wie 95% und insbesondere 98% der Partikeldurchmesser größer 100 nm ist, werden als grobskalige Partikel bezeichnet.

"Nanoskalig" sind Teilchengrößenverteilungen, deren mittlerer Partikeldurchmesser (d50) ≤ 100 nm ist. D. h. Partikel bei denen zu größer 50%, wie größer 70%, 80%, insbesondere größer 90%, wie 95% und insbesondere 98% der Partikeldurchmesser ≤100 nm ist, werden als nanoskalige Partikel bezeichnet.

Die erfindungsgemäß bei der Fällung einsetzbaren Additive sind dabei ein Wachstumsinhibitor A (Additiv A), ein Dispergiermittel B (Additiv B), eine wässrige Stearat-Lösung C (Additiv C) oder Mischungen davon.

Als Wachstumsinhibitor A können im Stand der Technik bekannte Wachstums-inhibitoren, wie sie z. B. in der DE 103 57 116 A1 beschrieben sind, eingesetzt werden.

Der Wachstumsinhibitor A zeichnet sich dadurch aus, dass er mindestens zwei anionische Gruppen aufweist. Bevorzugt enthält der Inhibitor als anionische Gruppen mindestens zwei der folgenden Gruppen: eine Sulfat-, eine Sulfonat-, eine Phosphonat-, oder eine Phosphatgruppe, bevorzugt mindestens zwei identische dieser Gruppen. Diese anionischen Gruppen erlauben eine anionische Kopplung des Additivs mit der Oberfläche des Magnesiumhydroxidpartikels. Alternativ können auch zwei verschiedene anionische Gruppen vorliegen.

Bei den Wachstumsinhibitoren A kann es sich um Monomere, Oligomere oder Polymere handeln. Natürlich können die Wachstumsinhibitoren auch Kombinationen von zwei oder mehreren der oben genannten Gruppen aufweisen.

Der Wachstumsinhibitor A kann auch als Salz dieser Verbindung eingesetzt werden, wobei die mehrere, anionische Gruppen enthaltende und aus hydrophoben und/oder hydrophilen Teilstrukturen bestehende Hauptkette auch verzweigt und/oder zyklisch sein kann. Des Weiteren können Heteroatome (Stickstoff, Sauerstoff, Schwefel oder Phosphor) in dieser Hauptkette eingebaut sein.

Die Wachstumsinhibitoren A können in funktionalisierter Form vorliegen, das heißt sie können ein oder mehrere reaktive Endgruppen enthalten, z. B. Hydroxygruppen. Diese können später als funktionelle Gruppe mit einem Polymer wechselwirken und z. B. kovalente Bindungen ausbilden. Beispielhaft seien hier die kovalenten Bindungen genannt, die sich zwischen OH-Gruppen und einem Diisocyanat unter Bildung eines Polyurethans ausbilden.

Solche funktionalisierten Wachstumsinhibitoren A sind z. B. hydroxysubstituierte Carbonsäureverbindungen, wie hydroxysubstituierte Mono- und Dicarbonsäuren mit 1 bis 20 Kohlenstoffatomen, z. B. Zitronensäure, Apfelsäure, Dihydroxybernstein-säure und 2-Hydroxyölsäure. Besonders geeignet sind Zitronensäure und Polyacrylate.

Entsprechend gut geeignet sind auch Phosphorsäureacrylverbindungen mit 1 bis 10 Kohlenstoffatomen, die ggf. weitere Hydroxygruppen aufweisen.

Alternativ können auch Verbindungen eingesetzt werden, die weiterhin Stickstoffatome enthalten. Geeignete Verbindungen sind unter anderem Polyamino-verbindungen, wie Polyasparaginsäuren.

Solche reaktiven Gruppen können weiterhin Doppelbindungen, Hydroxy-, Amin-, und Thiolgruppen sein.

Die Menge an Wachstumsinhibitor A kann variieren. Üblicherweise werden Mengen von 0,1 bis 20 Gew.-% bezogen auf den Feststoffgehalt an Magnesiumhydroxid eingesetzt. Die Menge kann aber auf bis zu 50 Gew.-% erhöht werden, insbesondere dann, wenn zusätzlich ein Dispergiermittel B und/oder Stearat C vorhanden sind. Eine Versuchsdurchführung wird in Beispiel 1 beschrieben.

Typische Beispiele von Wachstumsinhibitoren A sind Natrium-Citrat/Zitronensäure, Polyacrylate, z.B. Sokalan® PA 20, Dispex® N40 von Ciba-Geigy oder Polyphosphate, z.B. Calgon® N.

Das Dispergiermittel B weist ähnlich dem Wachstumsinhibitor A mehrere anionische Gruppen in seinem Molekül auf. Auch kann es als Monomer, Oligomer oder als Polymer vorliegen. Das Dispergiermittel B kann auch als Salz dieser Verbindung eingesetzt werden, wobei die mit einer oder mehreren anionischen Gruppen enthaltende Hauptkette auch verzweigt oder zyklisch sein kann. Sie weisen entsprechend hydrophobe und/oder hydrophile Teilstrukturen auf. Diese eine oder mehrere im Oligomer oder Polymer vorliegende(n) anionische(n) Gruppe(n) kann/können unter anderem Carboxy-, Phosphonat-, Phosphat-, Sulfonat- oder Sulfatgruppen sein, die eine anionische Kopplung des Dispergiermittels B auf der Magnesiumhydroxidoberfläche bewirken. Neben den genannten anionischen Gruppen können weitere Haupt- und ggf. zusätzliche Seitenketten im Molekül des Dispergiermittels B vorhanden sein. Diese können die entstehenden Partikel elektrostatisch und/oder sterisch stabilisieren und somit eine Reagglomeration hemmen. Die Dispergiermittel B erlauben weiterhin die entstandene Magnesiumhydroxidsuspension bzw. -dispersion zu stabilisieren, um so lagerstabile Suspensionen bzw. Dispersionen zu erhalten. Die Dispergiermittel B verleihen dem Partikel außerdem eine äußere Polarität, die entsprechend der Auswahl des Dispergiermittels dem Partikel hydrophobere oder hydrophilere Eigenschaften verleihen und dadurch die Polarität dieser Partikel dahingehend beeinflusst, dass sie zur späteren Verwendung in z. B. einer Polymermatrix besser verwendbar sind und eine Agglomeration im Polymer verhindert bzw. die Desagglomerisation in der Matrix fördert. Dadurch können diese Magnesiumhydroxidpartikel, bevorzugt nanoskalige Magnesiumhydroxidpartikel, in desagglomerierter Form homogen verteilt in der Polymermatrix vorliegen.

Neben den genannten anionischen Gruppen kann das Dispergiermittel B weiterhin reaktive Endgruppen enthalten und somit funktionalisiert sein. Diese funktionalisierten Gruppen umfassen Hydroxygruppen aber auch Doppelbindungen, Amin- und Thiolgruppen. Mit Hilfe dieser funktionellen Gruppen kann eine spätere kovalente Verknüpfung mit einem Polymer erfolgen, ähnlich wie für die oben beschriebenen Wachstumsinhibitoren A.

Das Dispergiermittel B weist eine gute Wasserlöslichkeit auf, da dieses erfindungsgemäß entweder in der Magnesiumsalzlösung oder der Alkalihydroxyd-lösung vorliegt, oder zumindest gleichzeitig bei der in-situ-Fällung zu dem Reaktionsgemisch dieser beiden Lösungen hinzugefügt wird.

Geeignete Dispergiermittel B, die in wässrigen Lösungsmitteln verwendet werden können, umfassen Polyacrylate, wie z.B. Sokalan® PA (BASF), Polyethercarboxylate, wie z.B. Melpers® 0030 (BASF), Phosphorsäureester, wie z.B. Disperbyk® 102 (Byk-Chemie), oder Polyphosphate, wie z.B. Calgon® N oder hochmolekulare Polymere mit füllstoffaffinen Gruppen, z.B. als Blockcopolymer vorliegend, wie z.B. Disperbyk® 190.

Der Wachstumsinhibitor A kann gleichzeitig ein Dispergiermittel B sein, z.B. im Fall von Dispex® N40 (Ciba).

Die Menge des Dispergiermittels B kann variieren. Üblicherweise liegt das Dispergiermittel B in dem Reaktionsgemisch in einer Menge von 0,1 bis 50 Gew.-%, bevorzugt 0,1 bis 20 Gew.-% bezogen auf den Feststoffgehalt an Mg(OH)₂ vor. Wird nach dem erfindungsgemäßen Ausfällen eine weitere Bearbeitung mittels Ultraschall oder Perlmahlung durchgeführt, so ist die dabei aufzuwendende Energie geringer im Vergleich zu einem herkömmlichen mechanischen Zerkleinerungsprozess, da hier lediglich eine Desagglomeration lockerer Agglomerate durchgeführt werden muss und nicht ein mechanisches Aufbrechen von Kristallen.

Das Dispergiermittel B wird in dem erfindungsgemäßen Verfahren insbesondere dann eingesetzt, wenn eine lagerstabile Suspension oder Dispersion erhalten werden sollen. Insbesondere, wenn die erhaltenen gecoateten Magnesium-hydroxidpartikel direkt weiterverarbeitet werden sollen, z. B. in ein thermoplastisches Polymer eingearbeitet werden soll, wird eine Ausfällung des Magnesiumhydroxids bei Vorhandensein des Dispergiermittels B durchgeführt.

Als Additive C sei die Gruppe der Fettsäuren genannt. Diese können sowohl geradlinig als auch verzweigt, gesättigt, einfach oder mehrfach ungesättigt und mit unterschiedlichen Alkylkettenlängen (niedere, mittlere und höhere Kettenlängen) vorliegen. Nachfolgend sei als Beispiel für dieses Additiv C das Stearat genannt.

Die Stearat-Lösung C ist eine wässrige Stearat-Lösung, z. B. eine Natrium- oder Kaliumstearat-Lösung. Das Stearat kann in fester Form zu einer der genannten Lösungen, i) der Magnesiumsalzlösung oder ii) der Alkalihydroxidlösung zugefügt werden, und ist somit bei der Fällung in gelöster Form anwesend. Aufgrund seiner Carboxygruppe als anionische Gruppe umhüllt das Stearat die sich bei der Fällung bildenden Primärpartikel des Magnesiumhydroxids und coatet diese entsprechend. Das Stearat selbst hat keinen Einfluss auf die Primärkristallgröße der sich bildenden Primärpartikel des Magnesiumhydroxids. Obwohl das Stearat selbst keine sterische Stabilisierung der Partikel in wässrigen Lösungen erlaubt, zeigen die sedimentierten lockeren Magnesiumhydroxidagglomerate ein verbessertes Desagglomerierungs-verhalten bei der weiteren Verarbeitung im organischen Medium. Das heißt, das Coaten der Primärpartikel mit Stearat ermöglicht den Erhalt von Suspensionen oder Dispersionen von einzeln gecoateten Magnesiumhydroxidpartikeln. Selbst nach Trocknung der Suspensionen bzw. Dispersionen zeigen die dann vorliegenden Agglomerate der gecoateten Magnesiumhydroxidpartikel verbesserte Desagglo-merieru ngseigenschaften.

Die Menge an eingesetztem Natriumstearat kann variieren. Sie liegt im Bereich von 0,1 bis 10 Gew.-% bezogen auf den Feststoffgehalt an Mg(OH)₂.

Die genannten Additive können auch als Mischungen eingesetzt werden. Bevorzugt wird z. B. eine Mischung einer wässrigen Stearat-Lösung C und eines Wachstumsinhibitors A als Coating für die Primärpartikel des Magnesiumhydroxids. Dabei liegen die Mengen an eingesetztem Stearat und Wachstumsinhibitor A in den oben genannten Bereichen, bevorzugt liegen sie in Bereichen von 0,1 bis 10 Gew.-% bezogen auf den Feststoffgehalt an Mg(OH)₂ im Reaktionsgemisch.

Die Additive können dabei getrennt oder zusammen zum Reaktionsgemisch in Form einer wässrigen Lösung hinzugefügt werden. Alternativ können die Additive zusammen oder getrennt in einer der Ausgangslösungen (Alkalihydroxidlösung bzw. Magnesiumsalzlösung) vorliegen.

Die erhaltenen Suspensionen bzw. Dispersionen von Magnesiumhydroxidpartikeln können als solche weiterverarbeitet werden, oder anschließend getrocknet werden, z.B. durch Sprühtrocknung.

Die bei einer Verwendung einer Kombination von Stearat-Lösung C und Wachstumsinhibitor A erhaltenen Agglomerate von Magnesiumhydroxidpartikeln lassen sich leicht desagglomerieren und weiterverarbeiten.

Durch Verwendung des Wachstumsinhibitors A in Kombination mit dem Stearat C liegen die Primärpartikel dabei in einem nanoskaligen Bereich vor, so dass nanoskalige, gecoatete Magnesiumhydroxidpartikel erhalten werden.

Das Verfahren umfasst den Einsatz des Wachstumsinhibitors A in Kombination mit Dispergiermittel B. Die erfindungsgemäß erhältlichen Dispersionen von Magnesiumhydroxidpartikeln zeigen eine hervor-ragende Lagerstabilität ohne Sedimentation und keine Bildung von Agglomeraten auf.

Dabei werden gecoatete, nanoskalige Magnesiumhydroxidpartikel erhalten, die aufgrund des Vorhandenseins des sterisch stabilisierenden Dispergiermittels B als desagglomerierte Partikel in der Dispersion vorliegen. Diese Dispersion kann direkt weiterverarbeitet werden.

Erhältliche nanoskalige, gecoatete, desagglomerierte und bevorzugt funktionalisierte Magnesiumhydroxidpartikel weisen bei Einsatz von sowohl Wachstumsinhibitor A als auch Dispergiermittel B keine Neigung zur Agglomeration auf.

Die Menge des eingesetzten Wachstumsinhibitors A und des Dispergiermittels B können variieren. Sie liegen jeweils im Bereich von 0,1 bis 50 Gew.-% bezogen auf den Feststoffgehalt an Mg(OH)₂ bei Anwendung in wässrigen Lösungsmitteln. Bevorzugte Bereiche an Wachstumsinhibitor A und Dispergiermittel B liegen hier bei jeweils 10 bis 50 Gew.-% bezogen auf den Feststoffgehalt an Mg(OH)₂, um Primärpartikel mit Partikelgrößen von < 50 nm zu erhalten. Kombinationen von 5 bis 20 Gew.-% bezogen auf den Feststoffgehalt an Mg(OH)₂ Wachstumsinhibitor A und 5 bis 30 Gew.-% bezogen auf den Feststoffgehalt an Mg(OH)₂ Dispergiermittel B erlauben den Erhalt von Primärpartikeln mit Größen von <100 nm.

Wie bereits allgemein zu den Additiven ausgeführt, können die Additive Wachstumsinhibitor A und/oder Dispergiermittel B in funktionalisierter Form eingesetzt werden. Diese beiden funktionalisierten Additive, die als Coating auf den Primärpartikeln des Magnesiumhydroxids vorhanden sind, bewirken nach der Einarbeitung des Füllstoffes eine signifikante Verbesserung der mechanischen Eigenschaften der polymeren Werkstoffe.

Durch das Anpassen der Polarität von Wachstumsinhibitor A und Dispergiermittel B an die Polarität des fertigen Polymers kann die Einarbeitung der erhaltenen Magnesiumhydroxidpartikel als Füllstoff in Monomeren, Oligomeren und Polymeren durch eine leichtere Benetzbarkeit der Partikel signifikant verbessert werden.

Solche Kunststoffe können z. B. im Bereich von Flammschutz und im Leichtbaubereich eingesetzt werden. Solche Polymere werden z. B. im Bereich von Bootsbau, Windkraftanlagen, im Rohrleitungs- und Behälterbau, im Flugzeug- und im Fahrzeugbau usw. benötigt.

Durch den Einsatz von Magnesiumhydroxid als Füllstoff sind im Vergleich zu der Verwendung von Bariumsulfat oder Calciumcarbonat als Füllstoffe leichtere Bauteile erhältlich. Bei Einsatz von funktionalisierten Additiven, wie vorgehend beschrieben, werden dabei bevorzugte mechanische Eigenschaften der aus den Polymeren erhältlichen Bauteile erzielt.

Die mit dem erfindungsgemäßen Verfahren erhältlichen Magnesiumhydroxidpartikel weisen bei Zugabe von Wachstumsinhibitor A mindestens zu 90 %, bevorzugt mindestens 95 %, wie mindestens zu 98 %, besonders bevorzugt mindestens zu 99 %, insbesondere zu 100 % einen Durchmesser von <1000 nm, bevorzugt <500 nm, insbesondere bevorzugt <100 nm, insbesondere bevorzugt <50 nm auf.

Insbesondere durch den Einsatz des Wachstumsinhibitors A ist es möglich, die Primärpartikelgröße der Magnesiumhydroxidpartikel zu steuern. Das heißt, je größer die Menge an Wachstumsinhibitor A, umso geringer ist der durchschnittliche Partikeldurchmesser der erhaltenen Primärpartikel.

Korrespondierend zu der Primärpartikelgröße weisen die mit dem erfindungsgemäßen Verfahren erhältlichen Primärpartikel des Magnesiumhydroxids unter Zugabe von Wachstumsinhibitor A eine BET-Oberfläche von >100 m²/g, wie >120 m²/g und ganz besonders bevorzugt >200 m²/g auf. Insbesondere die Zugabe des Wachstumsinhibitor A erlaubt eine Erhöhung der spezifischen Oberfläche (BET) der ausgefällten Magnesiumhydroxidpartikel. Dabei ist festzustellen, dass je höher die Menge an Wachstumsinhibitor A in der Reaktionsmischung ist, umso höhere spezifische Oberflächen (BET) sind erhältlich.

Weiterhin wurde überraschend festgestellt, dass die Primärpartikelgröße und die BET-Oberfläche durch die Temperatur des Reaktionsgemisches zur Fällung von gecoateten Magnesiumhydroxidpartikeln steuerbar ist.

Das erfindungsgemäße Verfahren ist im Allgemeinen in einem Temperaturbereich von 0 bis 30°C durchführbar. Es zeigte sich nun, dass bei geringeren Temperaturen kleine Primärpartikel mit hohen BET-Oberflächen erzielt wurden, z.B. bei 20°C wurden Primärpartikel mit <100 nm mit einer BET-Oberfläche von ≥100 m²/g erhalten, während bei hohen Temperaturen die Primärpartikel einen größeren Durchmesser aufweisen und die BET-Werte niedriger sind, z.B. bei 80 °C wurden Primärpartikel mit einem Durchmesser von >800 nm und die BET-Werten von <100 m²/g erhalten und dieses ohne Zugabe von Wachstumsinhibitor A. Das heißt, bei steigenden Temperaturen sind kleinere BET-Werte und entsprechend größere Primärpartikelgrößen zu erwarten.

Ein wesentliches Merkmal des erfindungsgemäßen Verfahrens ist die Fähigkeit, die Primärpartikel einzeln zu coaten, das heißt die in der Suspension bzw. Dispersion vorliegenden grob- oder nanoskaligen Primärpartikel sind einzeln mit den zugefügten Additiven vollständig beschichtet.

In einer bevorzugten Ausführungsform werden die im Fällungsprozess erhaltenen, gecoateten Magnesiumhydroxidpartikel einem zweiten Verfahrensschritt unterzogen, nämlich einer Perlmahlung oder einer Ultraschallbehandlung.

In einem weiteren Aspekt richtet sich die vorliegende Erfindung somit auf Verfahren zur Herstellung von grob- und nanoskaligen Magnesiumhydroxidpartikeln, wobei mindestens 90 % der Magnesiumhydroxidpartikel einen Durchmesser von <1000 nm, bevorzugt <500 nm, wie <200 nm, insbesondere <100 nm und besonders bevorzugt <50 nm aufweisen.

Der erste Verfahrensschritt zeichnet sich dadurch aus, dass die in dem erfindungsgemäßen Fällungsprozess erhaltenen, gecoateten Magnesiumhydroxid-partikel entweder als wässrige Suspension oder Dispersion vorliegen, die gegebenenfalls auch getrocknet werden können (Pulverform).

Die bei dem ersten Verfahrensschritt (in-situ-Fällung) erhaltenen Suspensionen oder Dispersionen weisen einen Feststoffgehalt an Magnesiumhydroxidpartikeln von 0,1 bis 70 Gew.-% auf.

Die nach dem Fällungsprozess erhaltenen flüssigen oder festen (getrocknet) Produkte können einem weiteren, zweiten Verfahrensschritt - nämlich einer Perlmahlung oder einer Behandlung mit Ultraschall in Anwesenheit von einem Dispergiermittel B oder einem Dispergiermittel D - unterworfen werden. In diesem zweiten Verfahrensschritt werden als Produkte wässrige oder organische Dispersionen erhalten.

Das Dispergiermittel D ist hierbei wie oben unter Dispergiermittel B definiert. Das Dispergiermittel B ist ein in einem wässrigen Lösungsmittel lösliches Dispergiermittel. Hingegen ist das Dispergiermittel D eine Verbindung, die in organischen Lösungsmitteln löslich ist.

Als Edukt der Ultraschallbehandlung können grobskalige oder nanoskalige Magnesiumhydroxidpartikel verwendet werden, wie sie mit dem erfindungsgemäßen Fällungsprozess erhältlich sind. Insbesondere getrocknetes Magnesiumhydroxid, z.B. erhältlich durch eine Sprühtrocknung, das als nanoskaliges oder grobskaliges aber pregecoatetes Magnesiumhydroxidpulver vorliegt, ist erfindungsgemäß in diesem Ultraschallbehandlungsverfahrensschritt einsetzbar.

Dieses Magnesiumhydroxidpulver kann einerseits in einem wässrigen Lösungsmittel oder in einem organischen Lösungsmittel dispergiert werden. Die im Ausfällungsprozess erhaltenen gecoateten Magnesiumhydroxidpartikel können andererseits aber auch direkt als Suspension oder Dispersion im Schritt der Ultraschallbehandlung verwendet werden. Entsprechend wird hier, da die Suspension bzw. Dispersion eine wässrige Suspension bzw. wässrige Dispersion darstellt, ein Dispergiermittel B hinzugefügt.

Mit Hilfe der Ultraschallbehandlung ist es möglich, die agglomerierten Magnesium-hydroxidpartikel zu desagglomerieren. Das heißt, die Sekundärpartikel liegen in Form von lockeren Agglomeraten vor, ggf. ist die Desagglomerierung so vollständig, dass die Primärpartikel isoliert vorliegen. Diese desagglomerierten und einzeln gecoateten Magnesiumhydroxidpartikel können dann z. B. in aushärtbaren Massen oder in thermoplastische Polymere eingebracht werden, wobei die Partikel desagglomeriert und homogen verteilt in der Polymermatrix vorliegen.

Der erfindungsgemäße Ultraschallbehandlungsschritt zeichnet sich dadurch aus, dass gerade im großtechnischen Maßstab ein Verfahren bereitgestellt wird, das ökonomisch sinnvoll ist. Die Anschaffungs- und Betriebskosten der Vorrichtungen sind gering, insbesondere im Vergleich zum Stand der Technik.

Das in diesem Schritt verwendbare Dispergiermittel B kann funktionalisiert sein, wie oben dargestellt. Dieses ist insbesondere für die Verbesserung der mechanischen Parameter der Polymere, enthaltend desagglomerierte, gecoatete Magnesium-hydroxidpartikel als Füllstoff, vorteilhaft.

Das Dispergiermittel D ist ein in organischen Lösungsmitteln lösliches Dispergiermittel, welches anionische Gruppen enthält. Die eine oder mehrere anionische(n) Gruppe(n) ist(sind) z. B. Sulfonat-, Sulfat-, Phosphonat-, Phosphat- oder Carboxygruppen. Sie erlauben die entsprechende Wechselwirkung mit der Oberfläche der Magnesiumhydroxidpartikel. Als Funktionalisierungen können diese Dispergiermittel D die entsprechenden reaktiven Endgruppen in der Haupt- und/oder Seitenkette aufzeigen, z. B. Doppelbindungen, Hydroxy-, Carboxy-, Amin-, Thiol-, Diisocyanat- oder Epoxygruppen. Dieses ist insbesondere für die Verbesserung der mechanischen Parameter der Polymere, enthaltend desagglomerierte, gecoatete Magnesiumhydroxidpartikel als Füllstoff, vorteilhaft.

Die Dispergiermittel D können in niedermolekular Form, als Monomer, als Oligomer oder als Polymer vorliegen. Sie weisen entsprechend hydrophobe und/oder hydrophile Teilstrukturen auf.

Die Dispergiermittel B oder D werden in Mengen von 0,1 bis 20 Gew.-% bezogen auf den Festgehalt an Mg(OH)₂ eingesetzt.

Beispiele für das Dispergiermittel D sind Phosphorsäureester - z.B. Disperbyk ® 106 (Byk-Chemie), Silane, z. B. Glymo ® (Degussa) und Titanate, z. B. Ken-react CP-03 ® (Kenrich-Petrochemicals). Aber auch das als Dispergiermittel B genannte Polyethercarboxylat Melpers® 0030 (BASF) kann als Dispergiermittel D eingesetzt werden, da Melpers® 0030 auch in organischen Lösungsmitteln, wie z.B. n-Butanol, löslich ist.

Das heißt, Dispergiermittel, die unter die Definition des Dispergiermittels B fallen, können auch geeignete Dispergiermittel D darstellen.

Das als Edukt eingesetzte grob- oder nanoskalige Magnesiumhydroxid liegt in (pre)gecoateter Form vor, (pre)gecoatet mit mindestens einem der Additive A, B und/oder C. Die erneute, mindestens zweite Beschichtung ermöglicht es, grob- bzw. nanoskalige mehrfach gecoatete desagglomerierte und ggf. funktionalisierte Magnesiumhydroxidpartikel bereitzustellen.

Eine weitere Ausführungsform betrifft ein Verfahren zur Herstellung von nanoskaligen, gecoateten Magnesiumhydroxidpartikeln. Dieser zweite Verfahrens-schritt zeichnet sich dadurch aus, dass die nach der Fällung erhaltenen gecoateten Magnesiumhydroxidpartikel weiterhin den Schritt einer Perlmahlung in Anwesenheit von einem Dispergiermittel B oder einem Dispergiermittel D unterworfen werden.

Die nach Perlmahlung erhältlichen Magnesiumhydroxidpartikel haben mindestens zu 90 % einen Durchmesser von <500 nm, bevorzugt <150 nm.

Das gecoatete Magnesiumhydroxid kann in getrockneter Form, z. B. erhältlich durch Sprühtrocknung, oder als Suspension oder Dispersion eingesetzt werden. In getrockneter pulvriger Form liegt das Magnesiumhydroxid als nanoskaliges oder grobskaliges, aber locker agglomerisiertes Magnesiumhydroxidpulver vor. Dieses Pulver kann dann in einem wässrigen oder organischen Lösungsmittel dispergiert werden. Der Suspension bzw. Dispersion wird dann entsprechend ein Dispergiermittel B bei wässrigen Lösungen oder ein Dispergiermittel D bei organischen Lösungen zugefügt und anschließend wird eine Perlmahlung als eine Möglichkeit durchgeführt, um grob- oder nanoskalige, mehrfach gecoatete, desagglomerierte und ggf. funktionalisierte Magnesiumhydroxiddispersionen zu erhalten. Die erneute Zugabe, bzw. das weitere Coating mit dem Dispergiermittel B oder Dispergiermittel D verhindert die Reagglomeration der Magnesiumhydroxid-partikel.

Bei Durchführung des zweiten Verfahrensschrittes, sei es eine Ultraschallbehandlung oder eine Perlmahlung ist es möglich, die Mengen an eingesetzten Dispergiermitteln, die einen wesentlichen Kostenfaktor darstellen, sowohl im Fällungsschritt als auch im zweiten Verfahrensschritt zu verringern.

Des Weiteren ist es möglich, den Feststoffgehalt an Magnesiumhydroxid in den Suspensionen oder Dispersionen zu erhöhen, ohne dass Agglomerationen auftreten. Das heißt, die nach Ultraschallbehandlung oder Perlmahlung erhältlichen Dispersionen von grobskaligen oder nanoskaligen, mehrfach gecoateten Magnesium-hydroxidpartikel können einen Feststoffgehalt von 20 bis 70 Gew.-% Magnesiumhydroxid aufzeigen.

Diese nach der Perlmahlung oder Ultraschallbehandlung erhaltenen Dispersionen sind lagerstabil und können gebrauchsfertig gelagert oder direkt weiterverarbeitet werden. Bei Trocknung, z. B. Sprühtrocknung, dieser Dispersionen werden Magnesiumhydroxidpulver erhalten, die sich durch eine gute und leichte Redispergierbarkeit bzw. Desagglomerierbarkeit auszeichnen. Somit sind solche Magnesiumhydroxidpartikel insbesondere als Füllstoffe in Polymeren geeignet. Diese Polymere finden z. B. Einsatz beim Flammschutz oder in Bauteilen, z. B. in Bauteilen für die Flugzeugindustrie.

Mit dem zweistufigen Verfahren können die Mengen an eingesetzten Additiven verringert werden. Das heißt, insbesondere im Fällungsschritt des Magnesium-hydroxids können geringere Konzentration an Additiven A, B und/oder C eingesetzt werden. Dies ist insbesondere im großtechnischen Maßstab wichtig.

In einer besonders bevorzugten Ausführungsform enthält die Reaktionsmischung zum Fällen von gecoateten Magnesiumhydroxidpartikeln des Weiteren ein Wachstumsinhibitor A, um nanoskalige, gecoatete und ggf. funktionalisierte Magnesium-hydroxidpartikel zu erhalten. Diese nanoskaligen Magnesiumhydroxid-partikel können ebenfalls direkt in die Polymere eingearbeitet werden.

In einem weiteren Aspekt richtet sich die vorliegende Erfindung auf gecoatete primäre Magnesiumhydroxidpartikel, erhältlich nach zumindest einem der erfindungsgemäßen Verfahren.

Diese gecoateten Magnesiumhydroxidpartikel sind bevorzugt grob- oder nanoskalige, gecoatete Magnesiumhydroxidpartikel, die mindestens 90 %, bevorzugt mindestens 95 % und einen Durchmesser von <1000 nm, wie <500 nm, insbesondere <200 nm, bevorzugt <100 nm, und besonders bevorzugt <50 nm aufzeigen.

Die erfindungsgemäßen gecoateten Magnesiumhydroxidpartikel, erhältlich gemäß einem der erfindungsgemäßen Verfahren, zeichnen sich weiterhin dadurch aus, dass sie eine BET-Oberfläche von >100 m²/g aufweisen, besonders 120 m²/g, wie 150 m²/g und insbesondere 200 m²/g.

In einer bevorzugten Ausführungsform sind diese gecoateten Magnesiumhydroxidpartikel funktionalisiert, wie oben beschrieben.

Wenn notwendig, kann der pH-Wert des Reaktionsgemisches bei der Fällung oder als Suspension / Dispersion bei der Verarbeitung mit geeigneten Säuren oder Basen auf die gewünschten Werte eingestellt werden.

Im Folgenden wird die Erfindung mit Hilfe von Beispielen weiter dargestellt. Diese Beispiele dienen der weiteren Erläuterung der Erfindung ohne sie hierauf zu begrenzen.

### Versuchsbeispiele

### Beispiel 1: (Referenz)

In-situ-Verfahren zur Herstellung einer nanoskaligen, gecoateten Magnesium-hydroxidpartikel-Suspension oder Dispersion mittels Fällungsprozess unter Verwendung von einem Wachstumsinhibitor A.

Als Ausgangslösung wurde eine filtrierte wässrige Magnesiumchloridlösung mit einer Konzentration von circa 300 g/L zunächst auf eine Konzentration von 0,4 mol/L verdünnt. In ein 800 mL Becherglas hoher Form wurden 200 mL 0,4 mol/L Magnesiumchlorid-Lösung vorgelegt. Zu 400 mL einer 0,4 mol/L Natronlauge wurden 0,11 g Trinatriumcitrat als Wachstumsinhibitor A gegeben und gelöst (siehe Tabelle 1 - Versuch 2). Anschließend wurde mittels eines Dosimaten die Menge an Natronlauge, die auch den Wachstumsinhibitor A enthält, binnen zwei Minuten der Magnesiumchloridlösung zudosiert. Mit Hilfe eines Ultraturraxgerätes (Intensiv-Dispergiergerät, IKA, Deutschland) erfolgte eine intensive Durchmischung während der Zudosierung.

Nach dem Fällen wurden die Dispersionen in Abdampfschalen überführt und 24 Stunden bei 105°C im Trockenschrank getrocknet. Die so erhaltenen Pulver wurden mittels Mörser aufgemahlen und anschließend wurde die spezifische Oberfläche (BET) der erhaltenen Magnesiumhydroxidpartikeln bestimmt (Beckman-Coulter, LS13320).

**Tabelle 1**

| Bestimmung der spezifischen Oberfläche von gecoateten ausgefällten Magnesiumhydroxidpartikeln | | | |
|---|---|---|---|
| Versuch | Wachstumsinhibitor A | Menge Wachstumsinhibitor A** | Spez. Oberfläche (BET) |
| 1 (Vergleichsversuch) | - | - | 91 m²/g |
| 2 | Natriumcitrat | 2 % | 123 m²/g |
| 3 | Natriumcitrat | 10 % | 209 m²/g |
| 4 | Dispex N40 | 2 % | 127 m²/g |
| 5 | Dispex N40 | 10 % | 203 m²/g |

| | | | |
|---|---|---|---|
| * Dispex® N40 (Ciba) ist ein Beispiel für ein Polyacrylat ** bezogen auf den Feststoffgehalt an Mg(OH)₂ | | | |

Aus der Tabelle 1 wird deutlich, dass mit steigender Menge an Wachstumsinhibitor A die spezifische Oberfläche der erhaltenen Magnesiumhydroxidpartikel zunimmt und, damit einhergehend, die Größe der Primärpartikel sinkt.

### Beispiel 2 (Referenz)

In-situ-Verfahren zur Herstellung einer grob- oder nanoskaligen, gecoateten, funktionalisierten Magnesiumhydroxidpartikel-Suspension oder Dispersion durch einen Fällungsprozess unter Verwendung eines Dispergiermittels B als Coating.
Im folgenden Versuch wird das in Dispergiermittel B Melpers® 0030, BASF, 8,5 Gew.-% bezogen auf den Feststoffgehalt an Mg(OH)₂ ein Polyethercarboxylat mit terminalen reaktiven OH-Gruppen, verwendet. Die Versuchsdurchführung wurde wie im Beispiel 1 beschrieben durchgeführt. Die erhaltenen Magnesiumhydroxidpartikel hatten im Vergleich zur Vergleichsprobe nahezu identische BET-Oberflächen. Allerdings zeigte sich, dass die erhaltene wässrige Dispersion über mehrere Monate lagerstabil war. Außerdem sind die erhaltenen Magnesiumhydroxidpartikel leichter desagglomerierbar als die erhaltenen Partikel der Vergleichsprobe.
Des Weiteren wurde als Dispergiermittel B ein Phosphorsäureester - Disperbyk 102 ® (Byk-Chemie) - als Additiv eingesetzt. Der Additivgehalt betrug 8,5 Gew.-% bezogen auf den Feststoffgehalt an Mg(OH)₂. Das nach Fällung erhaltene Produkt in wässriger Suspension wurde getrocknet. Das getrocknete Produkt ließ sich leicht in einem organischen Lösungsmittel (Methylethylketon) resuspendieren, war als Suspension selbst lagerstabil und bildete keine festen Agglomerate aus.

### Beispiel 3 (Referenz)

In-situ-Verfahren zur Herstellung einer grob- oder nanoskaligen, gecoateten Magnesiumhydroxid-Suspension/Dispersion durch einen Fällungsprozess unter Verwendung einer wässrigen Stearat-Lösung C als Coating.
Die Versuchsdurchführung erfolgte, wie im Beispiel 1 beschrieben, mit der Ausnahme, dass anstelle von Wachstumsinhibitor A ein Natriumstearat C in der Natronlauge gelöst wurde. Die Konzentration betrug 2 Gew.-% Natriumstearat C bezogen auf den Feststoffgehalt an Magnesiumhydroxid. Das Fällungsprodukt wurde anschließend getrocknet und weiter charakterisiert. Das Fällungsprodukt bildete lockere Agglomerate, die aber später leicht desagglomeriert werden konnten. Die mittlere Partikelgröße des Fällungsproduktes blieb im Vergleich zu Magnesiumhydroxidpartikeln in Abwesenheit vom Stearat (siehe Beispiel 1 - Tabelle 1 - Versuch 1: BET 91 m²/g) nahezu konstant.

### Beispiel 4 (Referenz)

In-situ-Verfahren zur Herstellung einer nanoskaligen, gecoateten Magnesium-hydroxid-Suspension oder Dispersion durch einen Fällungsprozess unter Verwendung eines Gemisches aus einer wässrigen Stearat-Lösung C und einem Wachstumsinhibitor A als Coating.
Die Versuchsdurchführung erfolgte wie im Beispiel 1 mit Ausnahme, dass zusätzlich zu dem Wachstumsinhibitor A ein Natriumstearat C eingesetzt wurde, 5 Gew.-% bezogen auf den Feststoffgehalt an Mg(OH)₂. Während das Natriumstearat C in der Natronlauge gelöst vorlag, befand sich der Wachstumsinhibitor A Natriumcitrat in der Magnesiumchlorid-Lösung mit einer Konzentration von 2 Gew.-% bezogen auf den Feststoffgehalt an Mg(OH)₂. Durch Zusammenführen der beiden Lösungen wurde ein Fällungsprodukt von Magnesiumhydroxidpartikeln erhalten, die zügig nach der Fällung sedimentierten, also nicht lagerstabil waren. Nach Trocknung des Produkts im Trockenschrank (105°C, 24 Stunden), wurde die BET-Oberfläche bestimmt. Die spezifische Oberfläche (BET) betrug 120 m²/g.
Die Verwendung der Stearat-Lösung C führte zu einer Verbesserung der Desagglomerierungseigenschaften. Die zusätzliche Verwendung von Wachstums-inhibitor A führte zu einer Verringerung der Teilchengröße.

### Beispiel 5

In-situ-Verfahren zur Herstellung einer nanoskaligen, gecoateten Magnesium-hydroxid-Dispersion durch einen Fällungsprozess unter Verwendung eines Gemisches von Wachstuminhibitor A und Dispergiermittel B als Coating.
Die Versuchsdurchführung wurde wie im Beispiel 1 beschrieben durchgeführt mit der Ausnahme, dass Wachstumsinhibitor A und Dispergiermittel B eingesetzt wurden. Das heißt, als Ausgangslösung wurde eine filtrierte wässrige Magnesiumchlorid-Lösung mit einer Konzentration von 300 g/L vorgelegt. Diese wurde auf eine Konzentration von 0,4 mol/L verdünnt. In einem 800 mL Becherglas hoher Form wurden 200 ml 0,4 mol/L Magnesiumchlorid-Lösung vorgelegt. Zu 400 mL einer 0,4 mol/L Natronlauge wurden 1,63 g Trinatriumcitrat als Wachstumsinhibitor A zugefügt und gelöst. Zu der Magnesiumchlorid-Lösung wurden 5,44 g Melpers® 0030, BASF (Dispergiermittel B, vorkomplexierendes und sterisch stabilisierendes Mittel) zugefügt. Anschließend wurde mittels eines Dosimaten die Menge an Natronlauge enthaltend den Wachstumsinhibitor A, innerhalb von zwei Minuten der Magnesiumchlorid-Lösung, enthaltend das Dispergiermittel, zudosiert. Eine intensive Durchmischung des Reaktionsgemisches erfolgte mittels Ultraturrax, wie im Beispiel 1 beschrieben.

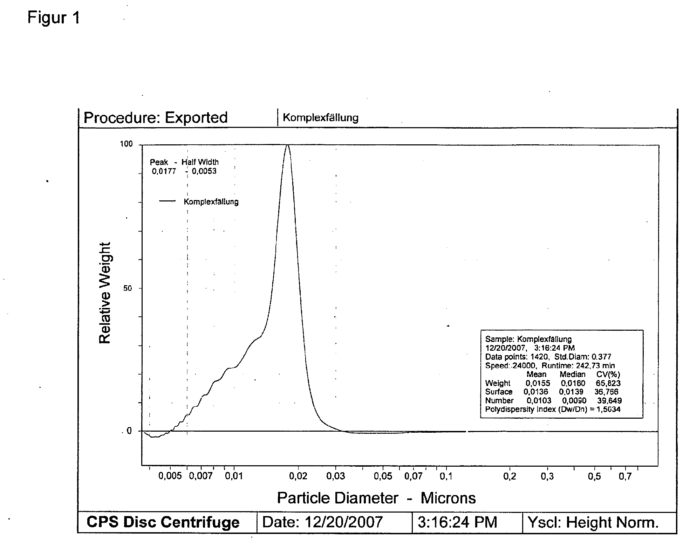

Es wurde eine transparente, lagerstabile Magnesiumhydroxid-Dispersion mit einem intensiven Blauschimmer erhalten. Die Messung der Partikelgröße ergab eine durchschnittliche Teilchengröße von 16 nm, siehe Figur 1. Die Teilchengrößen-Messung erfolgte mit einer LOT-Oriel Disc-Zentrifuge CPS, gemäß bekannten Verfahren.

Deutlich ist in der Figur 1 die enge Partikelgrößenverteilung zu erkennen. Durch Verwendung eines Wachstumsinhibitors A und eines Dispergiermittels B ist es möglich, lagerstabile Magnesiumhydroxid-Dispersionen zu erhalten, deren Primärpartikel im nanoskaligen Bereich liegen. Diese wässrigen und über Jahre lagerstabilen, nanoskaligen, gecoateten Magnesiumhydroxid-Dispersionen zeichnen sich durch Nichtausbildung von Agglomeraten aus. Das heißt, die Dispersion neigt nicht zur Agglomeration.

Die erhaltenen nanoskaligen, gecoateten, desagglomerierten Magnesiumhydroxid-partikel weisen durch die Verwendung von Melpers® 0030 als Dispergiermittel B reaktive OH-Funktionalitäten (Funktionalisierung) auf. Außerdem sind lange Seitenketten vorhanden. Diese beiden Eigenschaften des Melpers® 0030 erlauben, eine positive Beeinflussung der Verarbeitbarkeit des erhaltenen Magnesium-hydroxids in ein Polymer und Verbesserung der mechanischen Eigenschaften dieses Polymers, das dieses Magnesiumhydroxid als Füllstoff enthält.

### Beispiel 6

Herstellung einer grob- oder nanoskaligen, gecoateten, desagglomerierten Magnesiumhydroxid Dispersion durch Perlmahlung unter Zusatz von Dispergiermittel B als Coating.

Als Edukt kann grobskaliges oder nanoskaliges und vorzugsweise pregecoatetes Magnesiumhydroxid verwendet werden, erhältlich gemäß einem der in den Beispielen 1 bis 5 beschriebenen Verfahren, z. B. in getrockneter Form.

Das getrocknete Magnesiumhydroxid wurde mittels einer Ringsiebmühle (200 µm-Sieb) vorgemahlen. Nach der Mahlung wies das Pulver eine mittlere Teilchengröße von 6,85 µm auf (bestimmt mittels Beckmann Coulter LS 13320 gemäß den Anweisungen des Herstellers).

Das erhaltene vorgemahlene Magnesiumhydroxid wurde unter Rühren eines Labordissolvers (IKA, Deutschland) und unter Zugabe von destilliertem Wasser zu einer wässrigen Suspension verarbeitet. Um die Viskosität zu erniedrigen, wurde ein Dispergiermittel B zugegeben, das auch das spätere Reagglomerieren aufgebrochener Magnesiumhydroxidpartikeln verhindert. Das Dispergiermittel B, vorliegend Polyphosphat Calgon N ®, wurde in einer Menge von 3 Gew.-% bezogen auf den Feststoffgehalt an Magnesiumhydroxid hinzugefügt. Nachdem im Dissolver eine homogene Suspension mit einem Feststoffgehalt von 20 Gew.-% Magnesiumhydroxid hergestellt wurde, wurde diese mittels einer Rührwerks-kugelmühle AH 90, Hosokawa Alpine AG, weiter aufgemahlen. Der Verlauf des Mahlprozesses wurde durch Bestimmung der Partikelgrößenverteilung mittels Beckmann Coulter LS 13320 verfolgt. Es wurde eine wässrige, grobskalige, gecoatete und desagglomerierte Magnesiumhydroxid-Dispersion mit einem mittleren Teilchendurchmesser von 110 nm erhalten.

### Beispiel 7

Herstellung einer organischen, grob- oder nanoskaligen, gecoateten, desagglo-merierten Magnesiumhydroxid-Dispersion durch Perlmahlung unter Zusatz von Dispergiermittel D als Coating

Alternativ wurde die beschriebene Perlmahlung in einem organischen Lösungsmittel durchgeführt. Das erhaltene vorgemahlene und vorzugsweise pregecoatete Magnesiumhydroxid wurde unter Rühren eines Labordissolvers (IKA, Deutschland) und unter Zugabe von Methylethylketon zu einer organischen Suspension verarbeitet. Um die Viskosität zu erniedrigen, wurde ein Dispergiermittel D zugegeben, das auch das spätere Reagglomerieren aufgebrochener Magnesium-hydroxidpartikel verhindert. Das Dispergiermittel D, vorliegend ein Phosphor-säureester (Byk 102®, Byk-Chemie) wurde in einer Menge von 8,5 Gew.-% bezogen auf den Feststoffgehalt an Magnesiumhydroxid hinzugefügt. Nachdem im Dissolver eine homogene Suspension mit einem Feststoffgehalt von 40 Gew.-% Magnesiumhydroxid hergestellt wurde, wurde diese mittels einer Rührwerksmühle Bühler PML 2, weiter aufgemahlen. Der Verlauf des Mahlprozesses wurde durch Bestimmung der Partikelgrößenverteilung mit einer Disc-Zentrifuge (LOT-Oriel) verfolgt. Es wurde eine organische, nanoskalige, gecoatete und desagglomerierte Magnesiumhydroxid-Dispersion mit einem mittleren Teilchendurchmesser (d50) von 85 nm erhalten.

### Beispiel 8

Herstellung einer wässrigen, grob- oder nanoskaligen, gecoateten, desagglo-merierten Magnesiumhydroxid-Dispersion durch Ultraschall unter Zusatz von Dispergiermittel B als Coating.

Eine in den Beispielen 1 bis 5 erhaltene Suspension bzw. Dispersion von gecoateten Magnesiumhydroxidpartikeln wurde mit einem Dispergiermittel B versetzt (Sokalan PA20®, 8,5 Gew.-% bezogen auf den Feststoffgehalt an Magnesiumhydroxid) und im Kreislauf durch eine Ultraschallzelle gepumpt, in welche ein Ultraschallfinger (UIP 1000, Hielscher, Deutschland) eingetaucht war. Nach circa einer halben Stunde wird ausgehend von 2 Litern einer 50 %igen Suspension an Edukt eine nanoskalige, gecoatete, desagglomerierte Magnesiumhydroxid-Dispersion erhalten, die eine enge Partikelgrößenverteilung aufwies. Zum Beispiel konnte unter Einsatz einer gecoateten Magnesiumhydroxid-Suspension erhalten gemäß Beispiel 1 eine entsprechende Magnesiumhydroxid-Dispersion mit einer mittleren Partikelgröße von 105 nm erhalten werden.

### Beispiel 9

Herstellung einer organischen, grob- oder nanoskaligen, gecoateten, desagglomerierten Magnesiumhydroxid-Dispersion durch Ultraschall unter Zusatz von Dispergiermittel D als Coating.

Eine in den Beispielen 1 bis 5 erhaltene Suspension bzw. Dispersion von gecoateten Magnesiumhydroxidpartikeln wurde zunächst getrocknet und aufgemahlen. Das Pulver wurde anschließend mit einem organischen Lösungsmittel, hier n-Butanol, vermischt und mit einem Dispergiermittel D versetzt (Disperbyk 102®, Byk-Chemie, 8,5 Gew.-% bezogen auf den Feststoffgehalt an Magnesiumhydroxid) und im Kreislauf durch eine Ultraschallzelle gepumpt, in welche ein Ultraschallfinger (UIP 1000, Hielscher, Deutschland) eingetaucht war. Nach circa einer halben Stunde wird ausgehend von 2 Litern einer 50 %igen Suspension an Edukt eine nanoskalige, gecoatete, desagglomerierte Magnesiumhydroxid-Dispersion erhalten, die eine enge Partikelgrößenverteilung aufwies. Zum Beispiel konnte unter Einsatz einer gecoateten Magnesiumhydroxid-Suspension erhaltend gemäß Beispiel 1, welche sprühgetrocknet wurde, eine entsprechende Magnesiumhydroxid-Dispersion erhalten werden mit einer mittleren Partikelgröße von 92 nm.

Wie oben dargestellt konnte mit Hilfe des erfindungsgemäßen Verfahrens unter Ultraschallbehandlung eine Dispersion von gecoateten, desagglomerierten, ggf. funktionalisiertem Magnesiumhydroxid-Dispersion erhalten werden, die nanoskalige Partikel aufweist und die anschließend zur Weiterverarbeitung als Füllstoff in einem thermoplastischen oder duroplastischen Polymer eingesetzt werden kann.

### Beispiel 10

Herstellung einer organischen, grob- oder nanoskaligen, gecoateten, desagglo-merierten Magnesiumhydroxid-Dispersion durch Ultraschall

Die aus Beispiel 7 oder 9 erhaltene Suspension wird getrocknet und anschließend aufgemahlen (Ringsiebmühle). Das mehrfach gecoatete Pulver wird in einem organischen Lösungsmittel (Methylethylketon) aufgenommen und im Kreislauf durch eine Ultraschallzelle gepumpt, in welche ein Ultraschallfinger (UIP 1000, Hielscher, Deutschland) eingetaucht ist. Nach circa einer halben Stunde wird ausgehend von 2 Litern einer 50 %igen Suspension an Edukt eine grobskalige, gecoatete, desagglomerierte Magnesiumhydroxid-Dispersion erhalten, die eine enge Partikelgrößenverteilung aufwies. Bei Verwendung von Byk® 106 als pre-coating und Methylethylketon als Lösungsmittel wird eine Magnesiumhydroxid-Dispersion mit einer mittleren Partikelgröße (d50) von 150 nm erhalten.

## Patentansprüche

1. Verfahren zur Herstellung von gecoateten Magnesiumhydroxidpartikeln, wobei jedes einzelne Mg(OH)2-Partikel gecoatet ist, wobei i) eine Magnesiumsalzlösung mit ii) einer Alkalihydroxidlösung unter Bildung eines Reaktionsgemisches zur Fällung von gecoateten Magnesiumhydroxidpartikeln in Kontakt gebracht wird, **dadurch gekennzeichnet, dass** in zumindest einer der Lösungen i) oder ii) mindestens eines der folgenden Additive A, B und C enthalten ist und
bei Inkontaktbringen von i) und ii) eine Mischung aus einem Wachstums-inhibitor A und einem Dispergiermittel B in der Reaktionsmischung vorliegt, wobei die Additive sind
- ein Wachstumsinhibitor A,
- ein Dispergiermittel B,
- eine wässrige Stearat-Lösung C oder Mischungen hiervon,
zur Herstellung einer wässrigen Suspension oder Dispersion von gecoateten Magnesiumhydroxidpartikeln, wobei die Additive A mindestens 2 anionische Gruppen oder B mehrere anionische Gruppen aufweisen, und **dadurch gekennzeichnet ist, dass** die Fällung in einem niedrigen Temperaturbereich von 0 bis 30°C erfolgt und dass die Magnesiumhydroxidpartikel eine BET-Oberfläche von ≥ 100 m²/g aufweisen.

2. Verfahren nach Anspruch 1, **dadurch gekennzeichnet, dass** 0,1 bis 50 gew.-% Wachstumsinhibitor A bezogen auf den Feststoffgehalt an Mg(OH)₂ in der Reaktionsmischung vorliegen.

3. Verfahren nach zumindest einem der Ansprüche 1 und 2, **dadurch gekennzeichnet, dass** die Menge an Dispergiermittel B in der Reaktionsmischung 0,1 bis 50 Gew.-% bezogen auf den Feststoffgehalt an Mg(OH)₂ beträgt.

4. Verfahren nach zumindest einem der Ansprüche 1, 2 und 3 **dadurch gekennzeichnet, dass** die Menge Natriumstearat C 0,1 bis 10 Gew.-% bezogen auf den Feststoffgehalt an Mg(OH)₂ beträgt.

5. Verfahren nach zumindest einem der vorherigen Ansprüche, wobei die Menge an Wachstumsinhibitor A 0,1 bis 50 Gew.-% beträgt und die Menge an Dispergiermittel B 0,1 bis 50 Gew.-% beträgt, jeweils bezogen auf den Feststoffgehalt an Mg(OH)₂.

6. Verfahren nach zumindest einem der vorherigen Ansprüche zur Herstellung von grob- oder nanoskaligen Magnesiumhydroxidpartikeln, wobei mindesten 90 % der einzelnen Partikel einen Durchmesser von ≤ 500 nm aufweisen, **dadurch gekennzeichnet, dass** die nach der Fällung erhaltenen gecoateten Magnesiumhydroxidpartikel weiterhin den Schritt einer Behandlung mit Ultraschall in Anwesenheit von einem Dispergiermittel B oder einem Dispergiermittel D unterworfen werden.

7. Verfahren nach zumindest einem der Ansprüche 1 bis 5 zur Herstellung von grob- oder nanoskaligen gecoateten Magnesiumhydroxidpartikeln, wobei mindestens 90 % der einzelnen Partikel einen Durchmesser von ≤ 500 nm aufweisen, **dadurch gekennzeichnet, dass** die nach der Fällung erhaltenen gecoateten Magnesiumhydroxidpartikel weiterhin den Schritt einer Perlmahlung in Anwesenheit von einem Dispergiermittel B oder einem Dispergiermittel D unterworfen werden.

8. Verfahren nach Anspruch 6 oder 7, **dadurch gekennzeichnet, dass** während der Ultraschallbehandlung oder der Perlmahlung ein Dispergiermittel B in der wässrigen Suspension oder Dispersion der gecoateten Magnesiumhydroxidpartikel vorliegt.

9. Verfahren nach Anspruch 8, **dadurch gekennzeichnet, dass** die Menge an Dispergiermittel B 0,1 bis 20 Gew.-% bezogen auf den Feststoffgehalt an Mg(OH)₂ beträgt.

10. Verfahren nach Anspruch 6 oder 7, **dadurch gekennzeichnet, dass** die Menge an Dispergiermittel D 0,1 bis 20 Gew.-% bezogen auf den Feststoffgehalt an Mg(OH)₂ beträgt.

11. Verfahren nach zumindest einem der vorherigen Ansprüche, **dadurch gekennzeichnet, dass** der Wachstumsinhibitor A und/oder die Dispergiermittel B oder D in funktionalisierter Form verwendet werden.

12. Gecoatete primäre Magnesiumhydroxidpartikel erhältlich nach zumindest einem der Ansprüche 1 bis 11, **dadurch gekennzeichnet, dass** mindestens 90 %, bevorzugt mindestens 95 %, besonders bevorzugt mindestens 99 % der Partikel einen Durchmesser ≤ 100 nm aufweisen.

13. Wässrige Suspension oder Dispersion enthaltend grob- und/oder nanoskalige, und gecoatete, gegebenenfalls desagglomerierte und gegebenenfalls funktionalisierte Magnesiumhydroxidpartikel erhältlich nach einem Verfahren nach Anspruch 1 bis 5 oder gemäß Anspruch 12.

14. Organische oder wässrige Suspension oder Dispersion enthaltend grob- und/oder nanoskalige, und gecoatete, gegebenenfalls desagglomerierte und gegebenenfalls funktionalisierte Magnesiumhydroxidpartikel erhältlich nach einem Verfahren nach Anspruch 6 bis 11 oder gemäß Anspruch 12.

15. Suspension oder Dispersion nach Anspruch 14, **dadurch gekennzeichnet, dass** die Suspension oder Dispersion einen Feststoffgehalt an Magnesiumhydroxidpartikeln von 0,1 bis 70 Gew.-% aufweisen.

16. Suspension oder Dispersion nach Anspruch 15, **dadurch gekennzeichnet, dass** die Suspension oder Dispersion einen Feststoffgehalt an Magnesiumhydroxidpartikeln von 20 bis 70 Gew.-% aufweisen.

## Claims

1. A method for the production of coated magnesium hydroxide particles wherein each individual Mg(OH)₂-particle is coated, whereby i) a magnesium salt solution is brought into contact with ii) an alkali hydroxide solution to form a reactive mixture for precipitating coated magnesium hydroxide particles, **characterized in that** in at least one of the solutions i) or ii) at least one of the additives A, B and C is contained and
when bringing into contact of i) and ii) a mixture of the growth inhibitor A and the dispersant B is present in the reaction mixture, whereby the additives are
- a growth inhibitor A,
- a dispersant B,
- an aqueous stearate solution C or mixtures thereof,
for producing an aqueous suspension or dispersion of coated magnesium hydroxide particles, whereby additive A has at least two anionic groups and B has several anionic groups, **characterized in that** precipitation is carried out at a low range of temperature of 0 to 30°C and the BET-surface of the coated magnesium hydroxide particle is ≥ 100 m²/g.

2. The method according to claim 1, **characterized in that** the growth inhibitor A is present in amount of 0.1 to 50 wt.-% with reference to the solids content of Mg(OH)₂ in the reaction mixture.

3. The method according to anyone of claims 1 and 2, **characterized in that** dispersant B is present in an amount of 0.1 to 50 wt.-% with reference to a solids content of Mg(OH)₂ in the reaction mixture.

4. The method according to anyone of claims 1, 2 or 3, **characterized in that** stearate C is present in amount of 0.1 to 10 wt.-% with reference to a solids content of Mg(OH)₂ in the reaction mixture.

5. The method according to anyone of the preceding claims wherein the growth inhibitor A amounts to 0.1 to 50 wt.-% and the dispersant B amounts to 0.1 to 50 wt.-% with reference to a solids content of Mg(OH)₂ in the reaction mixture.

6. The method according to anyone of the preceding claims for preparing coarse scale or nanoscale magnesium hydroxide particle wherein at least 90 % of the particles have a diameter of ≤ 500 nm each, and further comprising the step of subjecting the coated magnesium hydroxide particles obtained after precipitation to the step of ultrasound treatment in the present of a dispersant B or a dispersant D.

7. The method according to anyone of claims 1 to 5 for preparing coarse scale or nanoscale coated magnesium hydroxide particle, wherein at least 90 % of the particles have a diameter of ≤ 500 nm each, and further comprising the step of subject in the coated magnesium hydroxide particles obtained after precipitation to the step of bead mill grinding in the presence of a dispersant B or a dispersant D.

8. The method according to claim 6 or 7, **characterized in that** during the ultrasound treatment or bead mill grinding, a dispersant B is present in the aqueous suspension or dispersion of the coated magnesium hydroxide particles.

9. The method according to claim 8 **characterized in that** the dispersant B is present in an amount of 0.1 to 20 wt.-% with reference to a solids content of Mg(OH)₂.

10. The method according to claim 6 or 7, **characterized in that** the dispersant D is present in an amount of 0.1 to 20 wt.-% with reference to a solids content of Mg(OH)₂.

11. The method according to at least one of the preceding claims, **characterized in that** the growth inhibitor A and/or the dispersant B or D are used in functionalize form.

12. Coated primary magnesium hydroxide particles obtainable according to at least one of claims 1 to 11, **characterized in that** at least 90 %, preferably at least 95 %, in particular preferred at least 99 % of the particles have a diameter ≤ of 100 nm.

13. An aqueous suspension or dispersion containing coarse scale and/or nanoscale and coated, optionally desagglomorated and optionally functionalized magnesium hydroxide particle obtainable according to a method of anyone of claims 1 to 5 or according to claim 12.

14. An aqueous or organic suspension or dispersion containing coarse scale and/or nanoscale and coated, optionally desagglomorated and optionally functionalized magnesium hydroxide particle obtainable according to a method of anyone of claims 6 to 11 or according to claim 12.

15. Suspension or dispersion according to claim 14, **characterized in that** the suspension or dispersion has a solids content of magnesium hydroxide particles of 0.1 to 70 wt.-%.

16. Suspension or dispersion according to claim 15, **characterized in that** the suspension or dispersion has a solids content of magnesium hydroxide particles of 20 to 70 wt.-%.

## Revendications

1. Procédé pour la préparation de particules revêtues d'hydroxyde de magnésium,
chaque particule individuelle de Mg(OH)₂ étant revêtue, i) une solution de sel de magnésium étant mise en contact avec ii) une solution d'hydroxyde alcalin avec formation d'un mélange réactionnel pour la précipitation de particules revêtues d'hydroxyde de magnésium, **caractérisé en ce qu'**au moins une des solutions i) ou ii) contient au moins un des additifs suivants A, B et C et lors de la mise en contact de i) et de ii), un mélange d'un inhibiteur de croissance A et d'un dispersant B se trouve dans le mélange réactionnel, les additifs étant
- un inhibiteur de croissance A,
- de dispersant B,
- une solution aqueuse de stéarate C ou des mélanges de ceux-ci,
pour la préparation d'une suspension ou d'une dispersion aqueuse de particules revêtues d'hydroxyde de magnésium, l'additif A présentant au moins 2 groupes anioniques ou l'additif B présentant plusieurs groupes anioniques et **caractérisé en ce que** la précipitation a lieu dans une plage de températures basses de 0 à 30°C et **en ce que** les particules d'hydroxyde de magnésium présentent une surface BET ≥ 100 m²/g.

2. Procédé selon la revendication 1, **caractérisé en ce que** le mélange réactionnel présente 0,1 à 50% en poids d'inhibiteurs de croissance A par rapport à la teneur en Mg(OH)₂ solide.

3. Procédé selon au moins l'une quelconque des revendications 1 et 2, **caractérisé en ce que** la quantité de dispersant B dans le mélange réactionnel représente 0,1 à 50% en poids par rapport à la teneur en Mg(OH)₂ solide.

4. Procédé selon au moins l'une quelconque des revendications 1, 2 et 3, **caractérisé en ce que** la quantité de stéarate de sodium C est de 0,1 à 10% en poids, par rapport à la teneur en Mg(OH)₂ solide.

5. Procédé selon au moins l'une quelconque des revendications précédentes, la quantité d'inhibiteur de croissance A étant de 0,1 à 50% en poids et la quantité de dispersant B étant de 0,1 à 50% en poids, à chaque fois par rapport à la teneur en Mg(OH)₂ solide.

6. Procédé selon au moins l'une quelconque des revendications précédentes pour la préparation de particules grossières ou nanométriques d'hydroxyde de magnésium, au moins 90% des particules individuelles présentant un diamètre ≤ 500 nm, **caractérisé en ce que** les particules revêtues d'hydroxyde de magnésium obtenues après la précipitation sont en outre soumises à une étape de traitement par des ultrasons en présence d'un dispersant B ou d'un dispersant D.

7. Procédé selon au moins l'une quelconque des revendications 1 à 5 pour la préparation de particules grossières ou nanométriques revêtues d'hydroxyde de magnésium, au moins 90% des particules individuelles présentant un diamètre ≤ 500 nm, **caractérisé en ce que** les particules revêtues d'hydroxyde de magnésium obtenues après la précipitation sont en outre soumises à une étape de broyage par des billes en présence d'un dispersant B ou d'un dispersant D.

8. Procédé selon la revendication 6 ou 7, **caractérisé en ce que** pendant le traitement aux ultrasons ou pendant le broyage par des billes, un dispersant B se trouve dans la suspension ou la dispersion aqueuse des particules revêtues d'hydroxyde de magnésium.

9. Procédé selon la revendication 8, **caractérisé en ce que** la quantité de dispersant B est de 0,1 à 20% en poids, par rapport à la teneur en Mg(OH)₂ solide.

10. Procédé selon la revendication 6 ou 7, **caractérisé en ce que** la quantité de dispersant D est de 0,1 à 20% en poids, par rapport à la teneur en Mg(OH)₂ solide.

11. Procédé selon au moins l'une quelconque des revendications précédentes, **caractérisé en ce que** l'inhibiteur de croissance A et/ou les dispersants B ou D sont utilisés sous forme fonctionnalisée.

12. Particules primaires revêtues d'hydroxyde de magnésium pouvant être obtenues selon au moins l'une quelconque des revendications 1 à 11, **caractérisées en ce qu'**au moins 90%, de préférence au moins 95%, de manière particulièrement préférée au moins 99% des particules présentent un diamètre ≤ 100 nm.

13. Suspension ou dispersion aqueuse contenant des particules, grossières et/ou nanométriques, et revêtues, le cas échéant désagglomérées et le cas échéant fonctionnalisées, d'hydroxyde de magnésium pouvant être obtenues selon un procédé selon la revendication 1 à 5 ou selon la revendication 12.

14. Suspension ou dispersion organique ou aqueuse contenant des particules, grossières et/ou nanométriques, et revêtues, le cas échéant désagglomérées et le cas échéant fonctionnalisées, d'hydroxyde de magnésium pouvant être obtenues selon un procédé selon la revendication 6 à 11 ou selon la revendication 12.

15. Suspension ou dispersion selon la revendication 14, **caractérisée en ce que** la suspension ou la dispersion présente une teneur en particules solides d'hydroxyde de magnésium de 0,1 à 70% en poids.

16. Suspension ou dispersion selon la revendication 15, **caractérisée en ce que** la suspension ou la dispersion présente une teneur en particules solides d'hydroxyde de magnésium de 20 à 70% en poids.
